# FASCICULE DE BREVET EUROPEEN

(11) **EP 1 788 884 B1**
(45) Date de publication et mention de la délivrance du brevet: **22.07.2009**
(21) Numéro de dépôt: 05802683.2
(22) Date de dépôt: 13.09.2005
(51) Int. Cl.: A23C 19/02, A23C 19/068, A23C 9/15, A23C 11/00

(54) **NOUVELLE TECHNOLOGIE POUR DES FROMAGES DE TYPES TRADITIONNELS**
NEUE TECHNOLOGIE FÜR TRADITIONELLE KÄSEARTEN
NOVEL TECHNOLOGY FOR TRADITIONAL-TYPE CHEESES

(30) Priorité: 14.09.2004 FR 0409736
(43) Date de publication de la demande: 30.05.2007
(73) Titulaire: Ingredia, 62000 Arras (FR)
(72) Inventeur: SNAPPE, Jean-Jacques, F-62149 FESTUBERT (FR); CHAUVIN, Bernard, F-49150 LE VIEL-BAUGE (FR); BOUDIER, Jean-François, F-62217 AGNY (FR); DAVID, Franck, F-62000 ARRAS (FR)
(74) Mandataire: Hennion, Jean-Claude
(86) Numéro de dépôt international: PCT/FR2005/002270
(87) Numéro de publication internationale: WO 2006/030128

(56) Documents cités:
- WO-A-03/051130
- US-A- 5 006 349
- US-A1- 2003 054 068

## Description

La présente invention concerne la fabrication de fromages et, en particulier, la fabrication de fromages de type traditionnels ou affinés à partir de concentrés protéiques en poudre appauvris en lactose.

La fabrication de fromage à partir de poudre de lait est bien connue. Cette façon de fabriquer des fromages est particulièrement avantageuse, car elle permet de dissocier en temps et lieu la fabrication de fromages de l'approvisionnement en lait frais. Ceci rend possible notamment la production de fromages en fonction de la demande et/ou dans des régions ne bénéficiant pas de ressources laitières propres.

Les procédés connus de fabrication de fromage à partir de poudre de lait sont des procédés rapides permettant l'obtention de fromage en seulement quelques étapes : mélange de la poudre de lait à de l'eau, des solutions d'acides ou des graisses, ajout éventuel d'enzymes, chauffage du mélange ainsi obtenu, ajout d'additifs divers. Les fromages obtenus sont des fromages frais ou fondus.

Le brevet WO03/051130 décrit un procédé rapide par rapport au procédé traditionnel où la fermentation est remplacée par l'ajout direct d'un acide, le saumurage est remplacé par l'ajout de sel dans la préparation de départ. L'obtention rapide du produit fini utilise la technologie des fromages fondus avec apport de sels émulsifiants. Le produit fabriqué n'évoluera pas ou peu en goût dans le temps, et présentera des caractéristiques organoleptiques relativement neutres.

Il existe cependant une demande importante de fromages de type traditionnels ou affinés. En effet, c'est l'affinage qui va développer les qualités gustatives propres à chaque fromage. L'affinage comprend les transformations successives que subit le fromage depuis la fin du salage jusqu'au moment où il est consommé. La température, le degré d'humidité, les spécificités des ferments utilisés, l'aération plus ou moins importante ainsi que les soins de goût final du fromage. Le processus d'affinage accroît la cohésion du fromage, celui-ci devient compact. Peu à peu, il change d'aspect : sa peau durcit, elle devient croûte. Son goût s'affirme et sa texture se modifie.

La présente invention a pour but de proposer un procédé de fabrication de fromages de type traditionnels ou affinés à partir de concentrés protéiques en poudre appauvris en lactose, qui diffère de celui décrit dans le document US-2003/054068.

Selon un premier aspect, l'invention concerne un procédé de fabrication d'un fromage de type traditionnel/affiné comportant de manière connue les étapes de moulage, étuvage/acidification, démoulage, salage et affinage, caractérisé en ce qu'il comprend d'abord les étapes suivantes :
a. introduire, dans un mélangeur solide-liquide, une composition de base comprenant :
   - de l'eau,
   - de la matière grasse,
   - des poudres comprenant des concentrés protéiques laitiers appauvris en lactose ; à savoir comprenant 10% ou moins en poids de lactose.
b. faire fonctionner le mélangeur avec une vitesse d'agitation de minimum 1500 tours/minute et à une température comprise entre 45 et 55°C en sorte d'émulsionner et homogénéiser ladite composition, puis la désaérer sous vide, jusqu'à l'obtention d'une pâte homogène émulsionnée désaérée ;
c. refroidir ladite pâte à une température inférieure ou égale à 40°C ;
d. ajouter à la pâte refroidie des auxiliaires de fabrication, sélectionnés dans le groupe : ferments d'acidification, ferments producteurs d'arômes, enzymes coagulantes ;
e. assurer une bonne homogénéisation de la pâte ainsi additionnée.

Le procédé selon l'invention peut comprendre une étape supplémentaire de pasteurisation de ladite pâte émulsionnée obtenue après l'étape b, à une température de minimum 72°C, pendant 15 secondes, ou par un traitement équivalent.

De manière caractéristique, le procédé de l'invention comprend, après l'étape de moulage, une étape d'étuvage ou de maturation réalisée sans élimination de lactosérum. L'étuvage a lieu à une température de l'ordre de 28 à 31°C et un taux d'hygrométrie maximal pour éviter tout effet de glaçage et de dessiccation de surface, jusqu'à l'obtention d'un pH de l'ordre des 4,8 à 5,3 (respectivement pour les pâtes molles et les pâtes pressées).

L'étape de salage (en saumure ou à sec) s'effectue de préférence après l'étape de démoulage et avant l'étape d'affinage. Le salage du fromage peut se faire en même temps que l'ajout des auxiliaires de fabrication, par addition de sel à la pâte refroidie.

La composition de base mise en oeuvre dans le procédé de fabrication d'un fromage de type traditionnel/affiné précité a un ratio protéines/eau en poids compris entre 0,3 et 0,9.

Les poudres entrant dans la composition mise en oeuvre dans le procédé de fabrication d'un fromage de type traditionnel/affiné se caractérisent par une teneur en protéines supérieure à 65% en poids et de préférence supérieure à 75%. Le ratio caséine/protéines totales est supérieur à celui du lait (c'est-à-dire à 0,8) et de préférence compris entre 0,85 et 0,92.

Des fromages de type traditionnel/affiné : fromages à pâte molle, à pâte pressée, à pâte dure cuite ou non cuites, peuvent être obtenus par la mise en oeuvre du procédé selon l'invention.

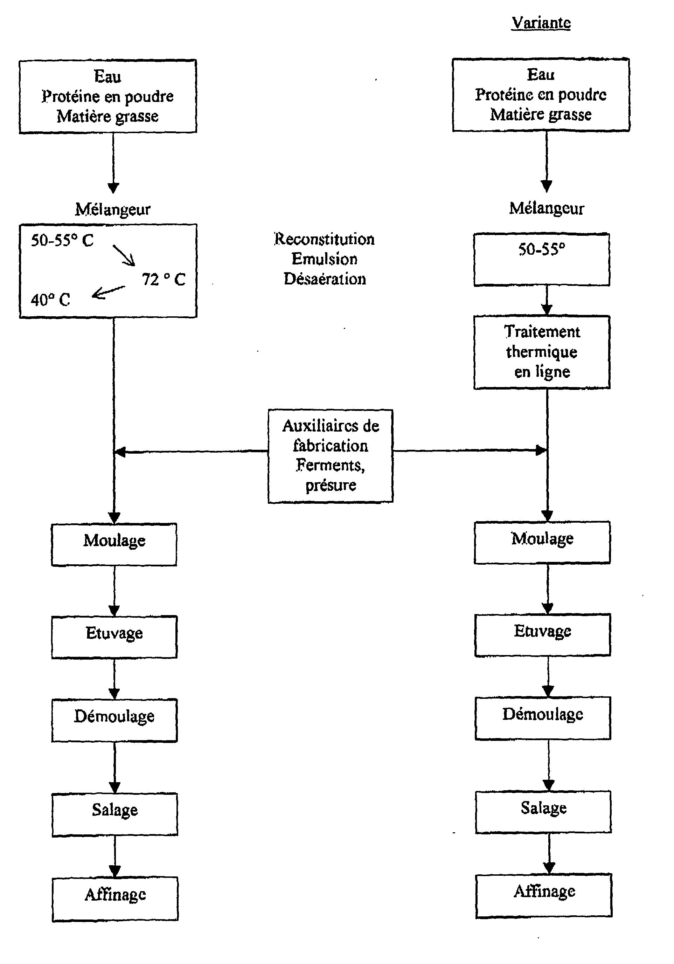

D'autres caractéristiques et avantages apparaîtront dans la description détaillée qui va suivre d'un procédé selon l'invention, donnée à titre d'exemple non limitatif au regard du schéma annexé dans la figure unique.

Le procédé de fabrication d'un fromage de type traditionnel/affiné comprend une première étape consistant en à introduire, dans un mélangeur de type solide - liquide, une composition de base comprenant de l'eau, de la matière grasse et des poudres comprenant des concentrés protéiques laitiers appauvris en lactose. Le mélangeur peut être un matériel double enveloppe, de type double défloculeur en fond de cuve, permettant un brassage du mélange pouvant aller jusqu'au vortex. Ledit mélangeur doit développer une vitesse d'agitation de minimum 1500 tours/minute. Ledit mélangeur est ensuite mis en fonction et le travail mécanique avec recirculation du mixe est effectué pendant 30 minutes environ, l'ensemble étant traité à chaud, à une température comprise entre 45 et 55°C, de préférence entre 50 et 55°C. Dans cette étape, sont réalisés successivement:
- l'émulsion des la matière grasse avec une partie des protéines ;
- l'enrichissement définitif en protéines ;
- la réhydratation de l'ensemble des protéines.

La vitesse de circulation, le sens de rotation et de contre-rotation, le déflecteur de flux de matière, l'outillage de type rotor-stator de différents matériels permettent d'assurer une bonne reconstitution du mixe.

Pendant ce temps, la mise sous vide de l'équipement permet d'obtenir une pâte lisse, homogène et désaérée.

De manière caractéristique, le mix préfromage entièrement reconstitué présente un taux de matière sèche élevé, de 40 à 65% et de préférence de 51-55% en poids. Le procédé selon l'invention permet donc d'obtenir un préfromage dont le niveau de matière sèche est plus élevé que pour les préfromages obtenus notamment à partir du lait liquide par ultrafiltration ou autres techniques non-dénaturantes comme l'évaporation thermique.

Dans une variante de réalisation, ledit matériel double enveloppe est utilisé également pour effectuer les traitements thermiques de pasteurisation et de refroidissement, ce dernier étant destiné à ramener ladite pâte émulsionnée à une température inférieure ou égale à 40°C adéquate pour le moulage. Avant moulage, les auxiliaires de fabrication sont ajoutés à la pâte émulsionnée, éventuellement pasteurisée, et refroidie ; ces auxiliaires de fabrication sont sélectionnés dans le groupe : ferments d'acidification, ferments aromatiques, enzymes coagulantes, arômes. Une phase complémentaire de mélange permet d'assurer l'homogénéité de l'incorporation de ces auxiliaires. Dans cette variante de réalisation, on peut procéder à l'opération de moulage en même temps qu'on réalise la vidange de la cuve. Le moulage peut se faire avec des matériels variés, perforés ou non, avantageusement microperforés toilés (de type pâte pressée) pour respecter l'aspect du fromage traditionnel.

Dans une autre variante de réalisation, le matériel double enveloppe est utilisé uniquement pour réaliser la reconstitution. Les étapes de traitement thermique, puis de refroidissement à une température inférieure ou égale à 40°C, peuvent être réalisées au moyen d'un équipement complémentaire tubulaire ou à surface raclée, suivies de l'incorporation en ligne des auxiliaires de fabrication ou technologiques (ferments, coagulant, arôme) et complétées par le passage toujours en continu dans un mélangeur dynamique afin d'assurer l'homogénéité parfaite de la pâte additionnée. Le moulage se fait nécessairement en continu, immédiatement à la sortie du mélangeur dynamique.

Les ferments d'acidification et de développement d'arômes additionnés à ladite pâte refroidie sont sélectionnés dans le groupe : ferments mésophiles, ferments thermophiles, et appartiennent aux genres *Lactobacillus* et/ou *Streptococcus.*

Les enzymes de coagulation additionnées lors de l'étape d du procédé sont sélectionnées dans le groupe : présure, protéase, lipase.

Dans tous les cas, l'étape de pasteurisation de la pâte émulsionnée s'effectue à une température de minimum 72°C, pendant 15 secondes, ou par un traitement équivalent.

La texture pâteuse du préfromage obtenu après l'étape e permet, par son niveau de matière sèche, par sa viscosité supérieure à 20 Pa.s (mesurée avec un viscosimètre Haake) et par son homogénéité, le moulage du fromage directement dans des moules ou réceptacles non-perforés ou comportant des perforations de 0,2 à 0,5 millimètres de diamètre, sans qu'il y ait risque d'écoulement du préfromage encore liquide par les trous, c'est-à-dire avant sa coagulation sous l'effet d'un coagulant, notamment de la présure.

Le préfromage non coagulé mis en moule ou réceptacles perforés peut, après sa coagulation, devenir un fromage à croûte formée imprimée personnalisée sous l'effet du simple contact de la matière préfromage avec la trame ou le dessin en trois dimensions du moule/réceptacle.

Le procédé selon l'invention comprend, après l'étape de moulage, une étape d'étuvage ou de maturation pour parfaire la coagulation et l'acidification ; cette étape consiste à mettre les fromages dans leurs moules en étuvage à une température de 28 à 31°C et un taux d'hygrométrie de 99 à 100%, pendant une période de temps pouvant aller de quelques heures à 20 heures, jusqu'à l'obtention d'un pH de l'ordre de 5,3 à 4,8.

De manière caractéristique selon l'invention, l'étape d'étuvage est réalisée sans élimination de lactosérum, ce qui présente de nombreux avantages :
- pas d'élimination de produit liquide dans la fromagerie ;
- locaux de fabrication restant plus secs et moins pollués ;
- moins de souillures fermentescibles, donc un nettoyage facilité ;
- pas de sous-produit à valoriser ;
- moins d'infrastructure de production et de transport.

Le procédé selon l'invention permet de réaliser le moulage de fromages directement portionnés.

Après l'étuvage, les fromages sont démoulés puis salés en saumure ou à sec selon les procédés connus par l'homme du métier. Pour certains types de fromage, notamment ceux des petits poids, le sel peut être incorporé directement à la phase d, en même temps que les auxiliaires de fabrication.

Le reste des opérations correspond aux techniques habituelles de fromagerie. Les produits ainsi obtenus à partir de poudre et sans présence de sous-produits à traiter, comme du lactosérum, ont la particularité d'être très proches des fromages traditionnels et peuvent être affinés comme tels.

Certains fromages fraîchement fabriqués jeunes (de différents types comme le Burgos) peuvent être consommés en l'état ou en blanc et sans croûte.

On peut développer des croûtages naturels, fleuris, morgés, enrobés, voire filmés, comparables à certaines références telles que gouda, leerdamer, emmental, Saint Paulin, Brie.

De la même façon, on peut développer des textures de pâtes plus ou moins fermes, aveugles, mais aussi des pâtes avec des ouvertures mécaniques ou fermentaires.

L'invention sera mieux comprise à la lecture de la description qui va maintenant être faite de plusieurs exemples de fabrication de fromages des type traditionnel à partir de concentrés protéiques en poudre appauvris en lactose.

### Exemple 1 :

Le procédé peut s'appliquer à un fromage à pâte aveugle de type cheddar américain (pâte colorée jaune orangée).

On introduit dans le mélangeur 71,3 kg d'eau, 42,2 kg de matière grasse laitière anhydre, 36,5 kg d'un concentré protéique en poudre à 78% de protéines et 6% de lactose.

On fait fonctionner le mélangeur avec une vitesse de mélange de 1500 tours/minute et une récirculation du mixe pendant 30 minutes environ à 50°C.

Le mixe est pasteurisé à 72°C pendant 15 secondes, puis refroidi à 40°C. Les auxiliaires technologiques sont ensuite ajoutés et bien mélangés à l'ensemble du mixe. A 2,200 kg de mixe sont ajoutés:
- 5 ml d'une solution de colorant Rocou A 320 WS de Chr. Hansen France (3 ml de colorant dans 6 ml d'eau) ;
- arôme Cheddar Flavor 9808 de Chr. Hansen France à hauteur de 2% ;
- 1,5 ml d'une solution de STB-01 *(Streptococcus thermophilus)* de Chr. Hansen France (2g de STB-01 dans 24 ml d'eau) ;
- 1,5 ml d'une solution de SDMB-04 *(Lactococcus lactis)* de Chr. Hansen France (2g de SDMB-04 dans 24 ml d'eau) ;
- ajustement de la température à 35°C, puis ajout de 1 ml de Présure 520 mg/l de chymosine diluée au 1/10^{e} par kg de mixe.

Les fromages sont moulés en moules plastiques rectangulaires. Sont effectués ensuite les étapes : acidification jusqu'à un pH de 5,25 ; refroidissement à 12°C ; démoulage et saumurage.

Le fromage après salage est conditionné en sachets en plastique étanches, pour être ensuite :
- affiné en anaérobie à 12°C pendant 7 jours ;
- mis au froid pendant 10 jours ;
- déballé et conditionné sous vide ;
- stocké à 4°C.

On obtient des fromages avec une pâte onctueuse et fondante. La coupe est homogène. Le goût est agréable, légèrement typé cheddar américain.

### Résultats de la dégustation des fromages Panel de dix dégustateurs):

Aspect: Pain parallélépipédique, homogène sans croûte de couleur orangée peu soutenue
Odeur: Très légère, fruitée
Texture: Tranchable au couteau, assez ferme et légèrement collante
La pâte est complètement fermée, aveugle. Elle n'est pas cassante Goût: En première impression en bouche, le goût est plutôt doux pour laisser apparaître, ensuite, un goût plus typé affiné de type aigrelet/ piquant.
Conclusion: Le fromage est identifié comme un cheddar américain.

### Exemple 2 :

Le procédé peut s'appliquer à un fromage type emmental, avec ou sans ouverture propionique.

On introduit dans le mélangeur 47 kg d'eau, 28 kg de matière grasse laitière anhydre, 24 kg d'un concentré protéique en poudre à 78% de protéines et 6% de lactose.

On fait fonctionner le mélangeur avec une vitesse d'agitation de 1500 tours/minute et une recirculation du mixe pendant 30 minutes environ à 50°C. Le mixe est pasteurisé à 72°C pendant 15 secondes, puis refroidi à 40°C.

Les auxiliaires technologiques et additifs sont ensuite ajoutés et bien mélangés à l'ensemble du mixe. A 12 kg de mixe on ajoute:
- 8 ml d'une solution de STB-01 *(Streptococcus thermophilus)* de Chr. Hansen France (2g de STB-01 dans 24 ml d'eau) ;
- 8 ml d'une solution de SDMB-04 *(Lactococcus lactis)* de Chr. Hansen France (2g de SDMB-04 dans 24 ml d'eau) ;
- 8 ml d'une solution de LHB-01 *(Lactobacillus helvéticus)* de Chr. Hansen France (2 g de LHB-01 dans 24 ml d'eau) ;
- 4 ml d'une solution de PS-1 de Chr. Hansen France (0,5 g de ferment propionique dans 25 ml d'eau) ;
- 12 ml de Présure 520 mg/l de chymosine diluée au 1/10^{e} ;
- 8,5 ml d'Afilact (lyzozyme liquide) de Chr. Hansen France.

Les fromages sont moulés en moules plastiques ronds lisses et moules plastiques toilés micro-perforés pour obtenir une croûte traditionnelle d'emmental toilé. Sont effectués ensuite les étapes : acidification jusqu'à un pH de 5,20 - 5,25 ; refroidissement à 15°C ; démoulage ; saumurage en saumure saturée à raison de 2 heures par kilo de poids du fromage (pour un fromage de 12 kg, saumurage de 24h).

Le fromage après salage est conditionné sous vide partiel en sachets en plastique étanches, pour être ensuite :
- préaffiné à 12°C pendant une semaine ;
- mis à 3-4°C pendant deux semaines et demi ;
- affiné à 17-18°C en cave traditionnelle avec une hygrométrie de 98-99%, pendant 2 à 3 semaines.

A ce stade, une partie des fromages est mise sous vide et stockée à 4°C, tandis qu'une autre partie des fromages est mise en affinage aérobie avec soin de surface en cave chaude à 18°C pour séchage et croûtage et ce pendant 15 jours puis stockée à 4°C.

Les fromages affinés sous vide présentent une pâte fermée et souple sans dessication et sans effet de croûtage.

Le goût emmental est marqué montrant qu'il n'y a pas de déperdition du gaz produit par les propioniques.

Les fromages croûtés, affinés avec soins de surface, présentent une pâte légèrement aérée (quelques yeux), homogène et onctueuse mais bien ferme pour un tranchage au couteau.

La croûte est ensuite nettoyée puis séchée pour pouvoir conditionner le fromage en portions sous vide et obtenir une parfaite conservation à +2°C / +4°C.

### Résultats de la dégustation des fromages Panel de dix dégustateurs):

Aspect: Fromage croûté laissant apparaître des micro-points correspondant à la trame de la toile de fabrication La croûte est propre, de couleur jaune dorée. Elle est ferme. La pâte est de couleur crème - jaune crème, elle apparaît lisse et homogène.
   A la coupe, apparaissent des ouvertures de fermentation.
Odeur: plutôt faible, légèrement fruitée.
Texture: Tranchable au couteau, et non collante
   La pâte est assez ferme mais fondante en bouche sans trop de mastication.
Goût: Typique de l'emmental, fruité et doux.
   Une note légèrement piquante (typique du goût emmental) a été remarquée par une majorité des dégustateurs (6 sur les 10)
Conclusion: Le fromage est identifié comme un emmental que l'on peut trouver en rayon coupe d'un supermarché.

### Exempte 3 :

Le procédé peut s'appliquer à un fromage de type hollande (gouda, edam, mimolette) dont l'extrait sec sera de 51- 53 %.

On introduit dans le mélangeur 45,3 kg d'eau, 16 kg de matière grasse laitière anhydre, 18,7 kg d'un concentré protéique en poudre à 76% de protéines et 8% de lactose.

On fait fonctionner le mélangeur avec une vitesse d'agitation de 1500 tours/minute et une récirculation du mixe pendant 30 minutes environ à 50°C. Le mixe est pasteurisé à 72°C pendant 15 secondes puis refroidi à 32,5°C.

Les auxiliaires technologiques sont ensuite ajoutés et bien mélangés à l'ensemble du mixe. A 1,5 kg de mixe sont ajoutés:
- 1,5 ml d'une solution de STB-01 *(Streptococcus thermophilus)* de Chr. Hansen France (2g de STB-01 dans 24 ml d'eau) ;
- 0,7 ml d'une solution de SDMB-04 *(Lactococcus lactis)* de Chr. Hansen France (2g de SDMB-04 dans 24 ml d'eau) ;
- 0,8 ml de Présure 520 mg/l de chymosine de Chr. Hansen France diluée au 1/10e.

Les fromages sont mis en moules. Sont effectués ensuite les étapes : acidification jusqu'à un pH de 5,20 à 31°C ; refroidissement à 15°C ; démoulage ; saumurage dans une saumure de densité 1180°B à 12°C.

Le fromage après salage est conditionné en sachets en plastique étanches, pour être ensuite :
- préaffiné en anaérobie à 12°C pendant 7 jours ;
- séché en surface par ventilation, pendant 2 à 3 jours, en cave d'affinage en aérobie à 12°C à une humidité de 95-96% pour former une croûte et augmenter la matière sèche du produit par dessication;
- refroidi ;
- enrobé sous cire ;
- refroidi et stocké à 4°C.

On obtient une texture homogène de type pâte pressée sans ouverture. La pâte est souple, bien tranchable au couteau. Le goût est fruité, noisette.

Les fromages peuvent être conservés à + 4°C pendant plusieurs semaines voire plusieurs mois.

L'affinage permet d'obtenir des fromages de type gouda jeune mais aussi mi-étuvé, après plusieurs semaines d'affinage complémentaire.

### Résultats de la dégustation des fromages (Panel de dix dégustateurs):

- Aspect:: Le fromage est croûté en surface et laisse apparaître une trame (toile de fabrication ou moules micro-perforés toilés).
La croûte est blonde dorée brillante.
La pâte est blanc crème, fermée et bien homogène
- Odeur:: Très faible d'un arôme fruité.
- Texture:: Pâte moyennement ferme, bien liée, souple, tranchâble au couteau. La texture est tendre en bouche
- Goût:: Agréable, doux et particulièrement fruité. Note diacétyle et de type noisette

Conclusion: Le fromage est identifié comme un type Hollande genre gouda jeune.

### Exemple 4 :

Le procédé peut s'appliquer à un fromage pâte molle à croûte fleurie à 42-44 % d'extrait sec. On introduit dans le mélangeur 91,2 kg d'eau, 25,8 kg de matière grasse laitière anhydre, 33 kg d'un concentré protéique en poudre à 80% de protéines et 4,5% de lactose.

On fait fonctionner le mélangeur avec une vitesse d'agitation de 1500 tours/minute et une recirculation du mixe pendant 30 minutes environ à 50°C. Le mixe est pasteurisé à 72°C pendant 15 secondes puis refroidi à 31°C.

Les auxiliaires technologiques sont ensuite ajoutés et bien mélangés à l'ensemble du mixe. A 1,5 kg de mixe on ajoute:
- 1,5 ml d'une solution de STB-01 *(Streptococcus thermophilus)* de Chr. Hansen France (2g de STB-01 dans 24 ml d'eau) ;
- 1,5 ml d'une solution de SDMB-04 *(Lactococcus lactis)* de Chr. Hansen France (2g de SDMB-04 dans 24 ml d'eau) ;
- 0,5 ml d'une solution de CHN19 (mixes mésophiles) de Chr. Hansen France (2 g de CHN19 dans 24 ml d'eau).

Les fromages sont mis en moules. Sont effectués ensuite les étapes :
mise en étuve à 31°C ; acidification jusqu'à un pH de 6,50 ; emprésurage avec 0,5 ml de Présure 520 mg/l de chymosine de Chr. Hansen France diluée au 1/10^{e}; acidification jusqu'au pH 5,10-5,15; refroidissement à 15°C; saumurage pendant 30 minutes dans une saumure de densité 1180°B à 12°C.

Le fromage après salage est conditionné en sachets en plastique étanches, pour préaffinage en anaérobie à 12°C pendant 7 jours. Les fromages sont ensuite sortis des sacs en plastique et sont pulvérisé en surface avec une préparation liquide de *Pénicillium candidum.*

Les fromages bien fleuris blancs, sont emballés avant d'être refroidis et stockés à 4°C.
Le fromage obtenu est de type pâte molle fleurie. La pâte est souple, homogène et onctueuse. La flore de surface est correctement répartie sur l'ensemble de la surface. Le goût est agréable, frais doux et crémeux.

### Résultats de la dégustation des fromage (panel de dix dégustateur):

- Aspect extérieur:: Le fromage est bien fleuri, bien blanc.
- Aspect de la coupe:: Coupe bien homogène, lisse, comportant quelques petites ouvertures (mécaniques ou fermentaires).
La croûte fleurie n'est pas trop épaisse.
- Odeur:: Agréable de crème maturée, note fruitée diacétyle.
- Texture:: Très légèrement collante au couteau.
Souple et fondante en bouche.
La pâte peut se tartiner.
- Goût:: Agréable, frais et crémeux en même temps

Conclusion: Le fromage est identifié comme une pâte molle à croûte fleurie genre brie pasteurisé.

Le ratio protéines/eau en poids est de minimum 0,3 pour les fromages à pâte molle et de maximum 0,9 pour les fromages à pâte dure.

La matière grasse est sélectionnée parmi : matière grasse butyrique, crème, matières grasses végétales.

La composition peut comprendre également des agents de charge, tels que amidons, maltodextrines, fibres, guar, caroube, en complément de l'extrait sec laitier, selon la législation locale.

Les poudres contiennent un ingrédient protéique fortement délactosé (contenant de 3 à 10% en lactose, en poids) et fortement concentré en protéines laitières natives et non-dénaturées (teneur supérieure à 65% de protéines en poids). Ces protéines laitières présentent un ratio de caséine/protéines totales supérieur à celui du lait (0,80) et de préférence compris entre 0,85 et 0,92.

Les fromages de type traditionnel/affiné : fromages à pâte molle, à pâte pressée, à pâte dure cuite ou non cuite, obtenus par la mise en oeuvre du procédé selon l'invention, sont sélectionnés dans le groupe : gouda, edam, mimolette, leerdamer, emmental, Saint Paulin, cheddar, gruyère, Brie, Camembert, Kashkaval. Ils présentent des caractéristiques organoleptiques très proches du produit de référence.

## Revendications

1. Procédé de fabrication d'un fromage de type traditionnel/affiné comportant de manière connue les étapes de moulage, étuvage/acidification, démoulage, salage et affinage, **caractérisé en ce qu'**il comprend d'abord les étapes suivantes :
a. introduire, dans un mélangeur solide-liquide, une composition de base comprenant de l'eau, de la matière grasse et des poudres comprenant des concentrés protéiques laitiers appauvris en lactose, à savoir comprenant 10% ou moins en poids de lactose ;
b. faire fonctionner le mélangeur avec une vitesse d'agitation de 1500 tours/minute minimum et à une température comprise entre 45 et 55°C en sorte d'émulsionner et homogénéiser ladite composition, puis la désaérer sous vide, jusqu'à l'obtention d'une pâte homogène émulsionnée désaérée ou mixe préfromage ;
c. refroidir ladite pâte à une température inférieure ou égale à 40°C ;
d. ajouter à la pâte refroidie des auxiliaires de fabrication, sélectionnés dans le groupe : ferments d'acidification, ferments producteurs d'arômes, enzymes coagulantes ;
e. homogénéiser la pâte ainsi additionnée.

2. Procédé selon la revendication 1, **caractérisé en ce que** le mixe préfromage entièrement reconstitué présente un taux de matière sèche de 40 à 65% et de préférence de 51-55% en poids.

3. Procédé selon l'une des revendications 1 ou 2, **caractérisé en ce qu'**il comprend une étape de pasteurisation de ladite pâte émulsionnée obtenue après l'étape b, à une température de minimum 72°C, pendant 15 secondes, ou par un traitement équivalent.

4. Procédé selon l'une quelconque des revendications 1 à 3, **caractérisé en ce que** l'étape de moulage est effectuée sans perte de préfromage liquide dans des moules comportant des perforations de 0,2 à 0,5 millimètre de diamètre ou non perforés.

5. Procédé selon l'une quelconque des revendications 1 à 4, **caractérisé en ce qu'**il comprend, après l'étape de moulage, une étape d'étuvage ou de maturation, réalisée sans élimination de lactosérum, pendant une durée de maximum 20 h, à une température de l'ordre de 28 à 31°C et un taux d'hygrométrie de 99 à 100%, jusqu'à l'obtention d'un pH de l'ordre de 4,8 à 5,3.

6. Procédé selon l'une quelconque des revendications 1 à 5, **caractérisé en ce que** l'étape de salage est réalisée en saumure ou à sec après l'étape de démoulage et avant l'étape d'affinage.

7. Procédé selon l'une quelconque des revendications 1 à 6, **caractérisé en ce que** l'étape de salage se fait par addition, en même temps que les auxiliaires de fabrication, de sel à ladite pâte refroidie.

8. Procédé selon l'une quelconque des revendications précédentes, **caractérisé en ce que** les ferments d'acidification additionnés à la pâte refroidie sont sélectionnés dans le groupe : ferments mésophiles et ferments thermophiles et appartiennent aux genres *Lactobacillus* et/ou *Streptococcus.*

9. Procédé selon l'une quelconque des revendications précédentes, **caractérisé en ce que** les enzymes de coagulation sont sélectionnées dans le groupe : présure, protéase, lipase.

10. Procédé selon l'une quelconque des revendications 1 à 9, **caractérisé en ce que** le ratio protéines/eau en poids de la composition de base est compris entre 0,3 et 0,9.

11. Procédé selon l'une quelconque des revendications 1 à 10, **caractérisé en ce que** la matière grasse de la composition de base est sélectionnée parmi : matière grasse butyrique, crème, matières grasses végétales.

12. Procédé selon l'une quelconque des revendications 1 à 11, **caractérisé en ce que** les poudres présentent un ratio caséine/protéines totales en poids compris entre 0,85 et 0,92.

13. Procédé selon la revendication 12, **caractérisé en ce que** les poudres présentent une teneur en protéines natives et non dénaturées en poids supérieure ou égale à 65%.

14. Procédé selon l'une quelconque des revendications 1 à 13 pour la fabrication d'un fromage de type traditionnel/affiné à pâte molle, à pâte pressée, à pâte dure cuite ou non cuite, sélectionné dans le groupe : gouda, edam, mimolette, leerdamer, emmental, Saint Paulin, cheddar, gruyère, Brie, Camembert, Kashkaval.

## Claims

1. Process to produce a cheese of traditional / ripened type comprising in manner known per se the steps of moulding, steaming / acidification, mould release, salting and ripening, **characterized in that** it firstly comprises the following steps:
a) adding, to a solid-liquid mixer, a basic composition comprising water, fat, and powders containing lactose-reduced dairy protein concentrates, namely containing 10 weight % or less of lactose;
b) setting the mixer in operation at a minimum mixing speed of 1500 revs/minute and at a temperature of between 45 and 55°C so as to emulsify and homogenize said composition, followed by vacuum de-aerating until a de-aerated, emulsified, homogeneous paste or pre-cheese mix is obtained;
c) cooling said mix down to a temperature of 40°C or less;
d) adding cheese-making auxiliaries to the cooled mix chosen from the group: acidification bacteria, flavour-producing bacteria, coagulating enzymes;
e) homogenizing the resulting mixture obtained.

2. Process according to claim 1, **characterized in that** the wholly reconstituted pre-cheese mix has a dry matter content of 40 to 65 wt. %, preferably 51-55 wt. %.

3. Process according to either of claims 1 or 2,
**characterized in that** it comprises a step to pasteurize said emulsified mix obtained after step b), at a minimum temperature of 72°C for 15 seconds or by equivalent treatment.

4. Process according to any of claims 1 to 3,
**characterized in that** the moulding step is performed without any loss of liquid pre-cheese in moulds having perforations with a diameter of 0.2 to 0.5 millimetres or having no perforations.

5. Process according to any of claims 1 to 4,
**characterized in that**, after the moulding step, it comprises a steaming or ripening step performed without elimination of whey, for a maximum time of 20h at a temperature of the order of 28 to 31°C and hygrometry of 99 to 100% until a pH in the order of 4.8 to 5.3 is obtained.

6. Process according to any of claims 1 to 5,
**characterized in that** the salting step is conducted in brine or by dry salting after the mould release step and before the ripening step.

7. Process according to any of claims 1 to 6,
**characterized in that** the salting step is conducted by adding salt to said cooled mix at the same time as the cheese-making auxiliaries.

8. Process according to any of the preceding claims, **characterized in that** the acidification bacteria added to the cooled mix are chosen from the group: mesophilic cultures and thermophilic cultures and belonging to the genii *Lactobacillus* and / or *Streptococcus.*

9. Process according to any of the preceding claims, **characterized in that** the coagulation enzymes are chosen from the group: rennet, protease, lipase.

10. Process according to any of claims 1 to 9,
**characterized in that** the protein / water weight ratio of the basic composition lies between 0.3 and 0.9.

11. Process according to any of claims 1 to 10,
**characterized in that** the fat in the basic composition is chosen from among: butyric fat, cream, vegetable fat.

12. Process according to any of claims 1 to 11,
**characterized in that** the powders have a casein / total protein weight ratio of between 0.85 and 0.92.

13. Process according to claim 12, **characterized in that** the powders have a weight content of native, non-denatured proteins of 65% or more.

14. Process according to any of claims 1 to 13 to produce a traditional / ripened cheese of soft type, pressed type, cooked or uncooked hard type, chosen from the group: gouda, edam, mimolette, leerdamer, emmental, Saint Paulin, cheddar, gruyere, Brie, Camembert, Kashkaval.

## Patentansprüche

1. Verfahren zur Herstellung eines Käses herkömmlicher/ausgereifter Art, das in bekannter Weise die Schritte des Formens, Trocknens/Säuerns, Ausformens, Salzens und Reifens umfaßt, **dadurch gekennzeichnet, daß** es zunächst die folgenden Schritte umfaßt:
a. Einbringen einer Grundzusammensetzung aus Wasser, Fett und Pulvern, welche laktosearme Milchproteinkonzentrate mit nämlich 10 oder weniger Gew.-% Laktose enthalten, in einen Feststoff-Flüssigkeits-Mischer,
b. Betreiben des Mischers mit einer Rührgeschwindigkeit von mindestens 1500 U/Min. und bei einer Temperatur zwischen 45 und 55°C, um die Zusammensetzung zu emulgieren und zu homogenisieren, anschließend Entlüften letzterer unter Vakuum bis zum Erhalt einer homogenen, emulgierten, entlüfteten Masse oder Vorkäse-Mischung,
c. Abkühlen der Masse auf eine Temperatur von weniger als oder gleich 40°C,
d. Zugeben von Herstellungszusätzen, ausgewählt aus der Gruppe der Säuerungsfermente, der aromaerzeugenden Fermente, Koagulationsenzyme, zu der abgekühlten Masse,
e. Homogenisieren der so angereicherten Masse.

2. Verfahren nach Anspruch 1, **dadurch gekennzeichnet, daß** die vollständig rekonstituierte Vorkäse-Mischung einen Trockenmassegehalt zwischen 40 und 65 Gew.-% und vorzugsweise zwischen 51 und 55 Gew.-% aufweist.

3. Verfahren nach einem der Ansprüche 1 oder 2, **dadurch gekennzeichnet, daß** es einen Schritt zum Pasteurisieren der nach Schritt b) erhaltenen emulgierten Masse bei einer Temperatur von mindestens 72°C für 15 Sekunden oder mittels einer äquivalenten Behandlung umfaßt.

4. Verfahren nach einem der Ansprüche 1 bis 3, **dadurch gekennzeichnet, daß** der Schritt des Formens ohne Verlust von flüssigem Vorkäse in Formen vollzogen wird, die Löcher mit einem Durchmesser zwischen 0,2 und 0,5 Millimetern oder keine Löcher aufweisen.

5. Verfahren nach einem der Ansprüche 1 bis 4, **dadurch gekennzeichnet, daß** es nach dem Formschritt einen Trocknungs- oder Reifeschritt umfaßt, der ohne Entfernen der Molke über einen Zeitraum von höchstens 20 Stunden, bei einer Temperatur in der Größenordnung von 28 bis 31°C und einem Feuchtigkeitsgehalt von 99 bis 100 % bis zum Erhalt eines pH-Wertes in der Größenordnung von 4,8 bis 5,3 durchgeführt wird.

6. Verfahren nach einem der Ansprüche 1 bis 5, **dadurch gekennzeichnet, daß** der Salzungsschritt in Salzlake oder trocken nach dem Schritt des Ausformens und vor dem Schritt des Reifens durchgeführt wird.

7. Verfahren nach einem der Ansprüche 1 bis 6, **dadurch gekennzeichnet, daß** der Salzungsschritt **dadurch** vollzogen wird, daß gleichzeitig mit den Herstellungszusätzen Salz zu der abgekühlten Masse gegeben wird.

8. Verfahren nach einem der vorhergehenden Ansprüche, **dadurch gekennzeichnet, daß** die der abgekühlten Masse zugegebenen Säuerungsfermente aus der Gruppe der mesophilen Fermente und thermophilen Fermente ausgewählt sind und zu den Gattungen Lactobacillus und/oder Streptococcus gehören.

9. Verfahren nach einem der vorhergehenden Ansprüche, **dadurch gekennzeichnet, daß** die Koagulationsenzyme aus der folgenden Gruppe, nämlich Lab, Protease, Lipase ausgewählt sind.

10. Verfahren nach einem der Ansprüche 1 bis 9, **dadurch gekennzeichnet, daß** das Proteine/Wasser-Gewichtsverhältnis der Grundzusammensetzung zwischen 0,3 und 0,9 liegt.

11. Verfahren nach einem der Ansprüche 1 bis 10, **dadurch gekennzeichnet, daß** das Fett der Grundzusammensetzung aus Butterfett, Rahm, pflanzlichen Fetten ausgewählt ist.

12. Verfahren nach einem der Ansprüche 1 bis 11, **dadurch gekennzeichnet, daß** die Pulver ein Gewichtsverhältnis von Casein zu Gesamtproteinen zwischen 0,85 und 0,92 aufweisen.

13. Verfahren nach Anspruch 12, **dadurch gekennzeichnet, daß** die Pulver einen Gehalt an nativen und nicht denaturierten Proteinen von mehr als oder gleich 65 Gew.- % aufweisen.

14. Verfahren nach einem der Ansprüche 1 bis 13, für die Herstellung eines Käses herkömmlicher/ausgereifter Art mit weicher Masse, gepreßter Masse, gebrannter oder nicht gebrannter harter Masse, ausgewählt aus der folgenden Gruppe, nämlich Gouda, Edamer, Mimolette, Leerdammer, Emmentaler, Saint Paulin, Cheddar, Greyerzer, Brie, Camembert, Kaschkawal.
